# EUROPEAN PATENT APPLICATION

(11) **EP 3 819 051 A1**
(43) Date of publication of application: **12.05.2021**
(21) Application number: 19830021.2
(22) Date of filing: 02.07.2019
(51) Int. Cl.: B23B 27/22, B23B 27/14, B23B 27/20, B23K 26/361, B23P 15/28, C04B 35/5831, B23C 5/16

(54) **CUTTING INSERT AND MANUFACTURING METHOD THEREOF**

(30) Priority: 03.07.2018 JP 2018126515
(71) Applicant: Sumitomo Electric Hardmetal Corp., Itami-shi, Hyogo 664-0016 (JP)
(72) Inventor: HIRANO, Tsutomu, Itami-shi, Hyogo 664-0016 (JP); KUKINO, Satoru, Itami-shi, Hyogo 664-0016 (JP)
(74) Representative: Boult Wade Tennant LLP
(86) International application number: PCT/JP2019/026335
(87) International publication number: WO 2020/009117

(57) **Abstract**

A cutting insert comprises: a body; and a blade fixed to the body and made of a polycrystalline cubic boron nitride including 98.5% by volume or more of cubic boron nitride, the blade having a rake face and a flank face, the rake face and the flank face meeting each other and thus forming a ridge line which serves as a cutting edge, the rake face being provided with a land surface extending along the cutting edge, and a chip breaker disposed on a side opposite to the cutting edge with the land surface therebetween and also having a recess contiguous to the land surface.

## Description

### TECHNICAL FIELD

The present disclosure relates to a cutting insert and a method for manufacturing the same. The present application claims priority based on Japanese Patent Application No. 2018-126515 filed on July 3, 2018. The disclosure in the Japanese patent application is entirely incorporated herein by reference.

### BACKGROUND ART

Cubic boron nitride (hereinafter also referred to as "cBN") has a hardness second to that of diamond, and is also excellent in thermal stability and chemical stability. In addition, cBN is more stable for iron-based materials than diamond is, and a cubic boron nitride sintered material has been used as tools for processing iron-based materials.

As the cubic boron nitride sintered material, a cubic boron nitride sintered material including a binder in an amount of about 10 to 40% by volume has been used. However, the binder has been a cause of reducing the strength and thermal diffusivity of the sintered material. In particular, when the cubic boron nitride sintered material is used for cutting an iron-based material at high speed, there is a tendency that thermal load increases, the cutting edge is easily chipped or cracked, and the tool's service life is shortened.

In order to solve this problem, a method for producing a cubic boron nitride sintered material containing no binder (hereinafter also referred to as "binderless cBN") has been developed. In this method, no binder is used, and hexagonal boron nitride is directly converted into cubic boron nitride under ultra-high pressure at ultra-high temperature without using a catalyst, and simultaneously sintered (For example, see Japanese Patent Application Laid-Open No. 11-246271 (PTL 1), WO2016/129328 (PTL 2), and WO2016/125548 (PTL 3)).

As binderless cBN has excellent wear resistance, it is used as a variety of tool materials such as cutting inserts.

When binderless cBN is used in a cutting insert, how chips should be handled is a problem depending on the processing conditions. In order to better handle chips, the cutting insert is provided with a chip breaker.

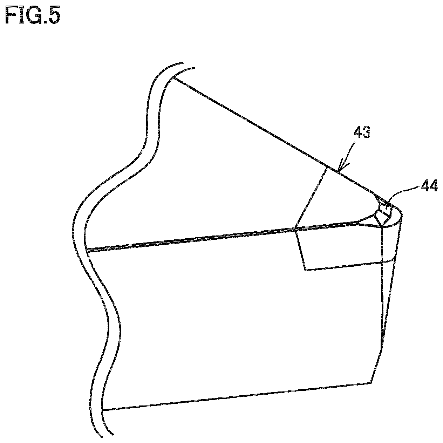

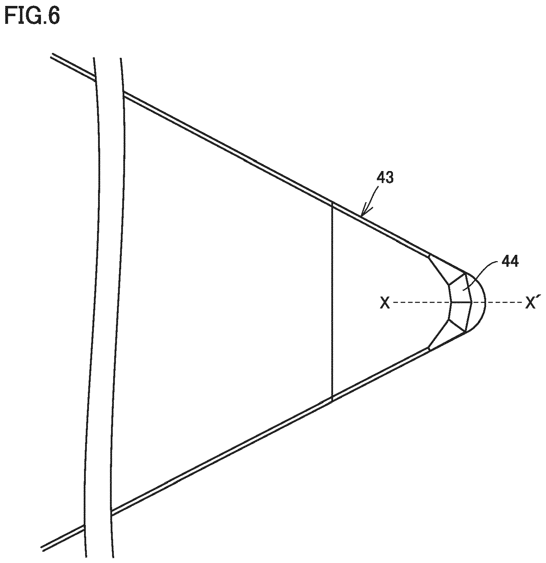

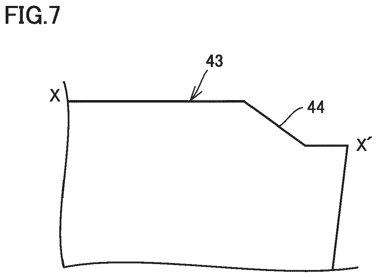

Binderless cBN is transparent and absorbs laser light in an extremely limited amount, and thus cannot be processed with a laser processing machine. Accordingly, when a chip breaker is formed on a cutting insert using binderless cBN, the chip breaker is formed by grinding with a grinding wheel. For example, as shown in Figs. 5 to 7, for a conventional blade 43, a corner has an upper surface and a side surface ground away with a grinding wheel to expose a surface, which is used as a chip breaker.

When chip breaker 44 is thus formed in a method by grinding with a grinding wheel, a constraint of the method necessitates forming a cutting edge at a position lower than the upper surface (that is, the rake face) of blade 43, and it is in effect difficult to provide a cutting edge at the same level as the upper surface of blade 43 and provide chip breaker 44 behind the cutting edge. Furthermore, when the method by grinding with a grinding wheel is used, it is difficult to provide a fine and complicated shape, and chip breaker 44 can only be formed in a simple shape.

### CITATION LIST

### PATENT LITERATURE

PTL 1: Japanese Patent Application Laid-Open No. 11-246271
PTL 2: WO2016/129328
PTL 3: WO2016/125548

### SUMMARY OF INVENTION

A cutting insert according to an aspect of the disclosure comprises:
a body; and
a blade fixed to the body and made of a polycrystalline cubic boron nitride including 98.5% by volume or more of cubic boron nitride,
the blade having a rake face and a flank face, the rake face and the flank face meeting each other and thus forming a ridge line which serves as a cutting edge,
the rake face being provided with a land surface extending along the cutting edge, and a chip breaker disposed on a side opposite to the cutting edge with the land surface therebetween and also having a recess contiguous to the land surface.

A method for manufacturing a cutting insert according to an aspect of the present disclosure is a method for manufacturing the cutting insert described above, comprising:
preparing a blade made of a polycrystalline cubic boron nitride including 98.5% by volume or more of cubic boron nitride;
bonding the blade to the body; and
irradiating a rake face of the blade with laser light to form on the rake face a chip breaker including a recess to obtain the cutting insert,
the laser light having a wavelength of 500 nm or more and 1200 nm or less,
the laser light having a repetition frequency of 100 Hz or more and 1500 Hz or less,
the laser light providing an output of 10 W or more and 6 kW or less.

A method for manufacturing a cutting insert according to an aspect of the present disclosure is a method for manufacturing the cutting insert described above, comprising:
preparing a blade made of a polycrystalline cubic boron nitride including 98.5% by volume or more of cubic boron nitride;
bonding the blade to the body; and
irradiating a rake face of the blade with laser light to form on the rake face a chip breaker including a recess to obtain the cutting insert,
the laser light having a wavelength of 500 nm or more and 1200 nm or less,
the laser light having a repetition frequency of 10 kHz or more and 1 GHz or less,
the laser light providing an output of 0.5 W or more and 50 W or less.

### BRIEF DESCRIPTION OF DRAWINGS

Fig. 1 is a diagram for illustrating a typical exemplary configuration of a cutting insert according to an aspect of the present disclosure.
Fig. 2 is an enlarged view of a blade of the cutting insert shown in Fig. 1.
Fig. 3 is a cross section taken along a line A-A' of Fig. 2.
Fig. 4 is an enlarged view of a chip breaker portion (a portion indicated in Fig. 3 by C) when the cutting insert shown in Fig. 3 comprises a hexagonal boron nitride layer.
Fig. 5 is a diagram for illustrating a typical exemplary configuration of a conventional cutting insert.
Fig. 6 is a top view of a blade of the cutting insert shown in Fig. 5.
Fig. 7 is a cross section taken along a line X-X' of Fig. 6.
Fig. 8 is a diagram for illustrating a cutting process using laser irradiation.

### DETAILED DESCRIPTION

### [Problem to be Solved by the Present Disclosure]

When a cutting edge is located below an upper surface (or a rake face) of a blade and a chip breaker has a simple shape, as conventional, the chip breaker may be unable to curl chips depending on the cutting condition and handle the chips, as desired.

An object is to provide a cutting insert which comprises a blade made of polycrystalline cubic boron nitride, and excellently handles chips and is excellently wear resistant, and a method for manufacturing the cutting insert.

### [Advantageous Effect of the Present Disclosure]

According to the above aspect, a cutting insert can excellently handle chips and be excellently wear resistant.

### [Description of Embodiments of the Present Disclosure]

Initially, embodiments of the present disclosure will be listed and described.
(1) A cutting insert according to an aspect of the disclosure comprises:
   a body; and
   a blade fixed to the body and made of a polycrystalline cubic boron nitride including 98.5% by volume or more of cubic boron nitride,
   the blade having a rake face and a flank face, the rake face and the flank face meeting each other and thus forming a ridge line which serves as a cutting edge,
   the rake face being provided with a land surface extending along the cutting edge, and a chip breaker disposed on a side opposite to the cutting edge with the land surface therebetween and also having a recess contiguous to the land surface.

   The cutting insert can excellently handle chips and be excellently wear resistant.
(2) Preferably, the cutting insert further comprises a hexagonal boron nitride layer formed on a surface of the chip breaker, and
   the hexagonal boron nitride layer includes 50% by volume or more and 100% by volume or less of hexagonal boron nitride and has a thickness of 2 µm or more and 10 µm or less.
   The hexagonal boron nitride layer formed on the surface of the chip breaker may cover the surface of the chip breaker entirely or partially. Desirably, the hexagonal boron nitride layer covers at least a portion of the surface of the chip breaker that comes into contact with chips during a cutting process.
   The cutting insert according to the present embodiment can be further excellently wear resistant.
(3) Preferably, the recess opens only for the rake face.
   In the cutting insert according to the present embodiment, the recess of the chip breaker does not penetrate to the flank face. In a case of forming a chip breaker in a conventional grinding or similar method, it has been in effect impossible to form a recess inside a land surface to be recessed with respect to the land surface. In particular, it has been impossible to form a land surface along a cutting edge and form a chip breaker including a recess that "does not penetrate to a flank face." The cutting insert according to the present embodiment has a chip breaker with a recess which does not penetrate to the flank face, and the cutting insert has a longer cutting edge and a longer chip breaker and thus provides improved cutting performance.
(4) Preferably, the rake face is flush with the upper surface of the blade, and the land surface is flush with the rake face.
   The cutting insert of the present embodiment allows chips to be easily shredded, and thus better handles the chips.
(5) The polycrystalline cubic boron nitride preferably has a transmittance of 0.2% or more for light of a range in wavelength of 500 nm or more and 1100 nm or less.
   The cutting insert of the present embodiment allows a portion of a workpiece frontwardly of a cutting point to be subjected to laser irradiation and heated, and thus softened and cut, and the cutting insert thus has a longer service life as a tool.
(6) A method for manufacturing a cutting insert according to an aspect of the present disclosure is a method for manufacturing a cutting insert according to any one of items (1) to (5) above, comprising:
   preparing a blade made of a polycrystalline cubic boron nitride including 98.5% by volume or more of cubic boron nitride;
      bonding the blade to the body; and
      irradiating a rake face of the blade with laser light to form on the rake face a chip breaker including a recess to obtain the cutting insert,
      the laser light having a wavelength of 500 nm or more and 1200 nm or less,
      the laser light having a repetition frequency of 100 Hz or more and 1500 Hz or less,
      the laser light providing an output of 10 W or more and 6 kW or less.

      The method for manufacturing a cutting insert according to the present embodiment can form a three-dimensional chip breaker having a complicated shape that conventionally could not be formed on a rake face of a blade made of polycrystalline cubic boron nitride with a grinding wheel.
(7) A method for manufacturing a cutting insert according to an aspect of the present disclosure is a method for manufacturing a cutting insert according to any one of items (1) to (5) above, comprising:
   preparing a blade made of a polycrystalline cubic boron nitride including 98.5% by volume or more of cubic boron nitride;
   bonding the blade to the body; and
   irradiating a rake face of the blade with laser light to form on the rake face a chip breaker including a recess to obtain the cutting insert,
   the laser light having a wavelength of 500 nm or more and 1200 nm or less,
   the laser light having a repetition frequency of 10 kHz or more and 1 GHz or less,
   the laser light providing an output of 0.5 W or more and 50 W or less.

The method for manufacturing a cutting insert according to the present embodiment can form a three-dimensional chip breaker having a complicated shape that conventionally could not be formed on a rake face of a blade made of polycrystalline cubic boron nitride with a grinding wheel.

### [Detailed Description of Embodiments of the Present Disclosure]

A cutting insert and a method for manufacturing the same according to an embodiment of the present disclosure will be described below with reference to the drawings. Note that the present invention is defined by the terms of the claims, rather than these examples, and is intended to include any modifications within the meaning and scope equivalent to the terms of the claims.

### [Cutting Insert]

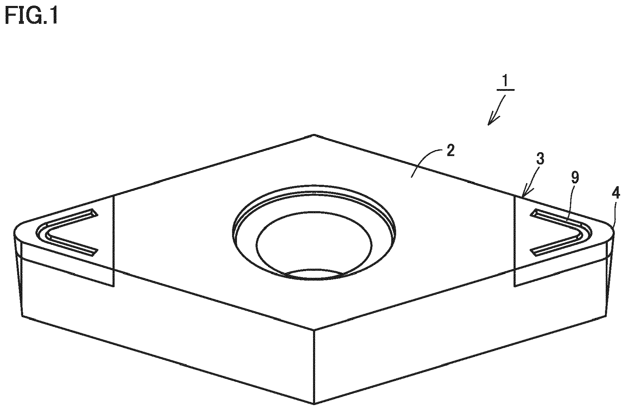

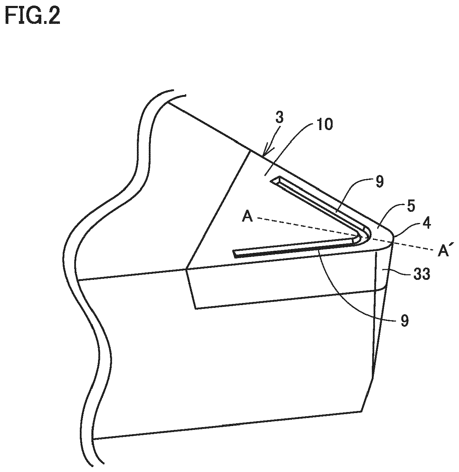

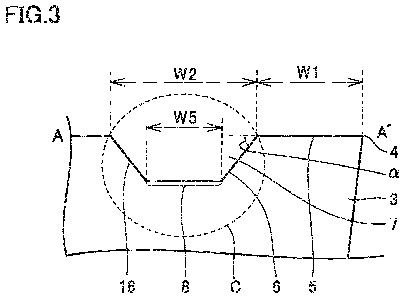

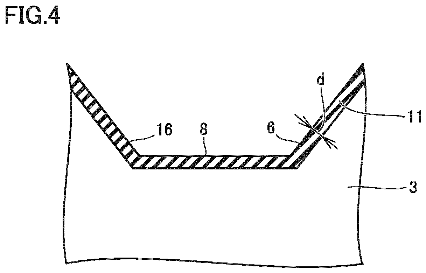

A cutting insert according to an embodiment of the present disclosure will now be described with reference to Figs. 1 to 4. Fig. 1 is a perspective view of a cutting insert 1 of an embodiment of the present disclosure. Fig. 2 is an enlarged perspective view of a blade 3 of a cutting insert shown in Fig. 1. Fig. 3 is a cross section of a chip breaker 9 portion of cutting insert 1 shown in Fig. 1 taken along a line A-A'. Fig. 4 is an enlarged view of a chip breaker portion (a portion indicated in Fig. 3 by C) when the cutting insert shown in Fig. 3 includes a hexagonal boron nitride layer.

As shown in Fig. 1, cutting insert 1 of the present embodiment includes a body 2 and blade 3 fixed to body 2. While cutting insert 1 of Fig. 1 is a rhombus in a plan view, it is not limited to any particular shape. For example, cutting insert 1 may have a triangular or square shape in plan view. For the cutting insert of Fig. 1, while body 2 has a plurality of corners and blade 3 is fixed to two of the plurality of corners, blade 3 may be fixed to one corner or three or more corners.

### (Body)

Body 2 can be formed of material such as steel, cemented carbide, etc.

### (Blade)

Blade 3 is fixed at a corner of an upper surface of body 2.

Blade 3 is composed of polycrystalline cubic boron nitride including 98.5% by volume or more of cubic boron nitride. Polycrystalline cubic boron nitride is excellent in strength and wear resistance, and the blade composed of polycrystalline cubic boron nitride can be excellent in strength and wear resistance and enhance the cutting insert in service life as a tool.

While the polycrystalline cubic boron nitride according to the present embodiment is a sintered material, in general, a sintered material is often intended to include a binder, and accordingly, the term "polycrystalline" is used in the present embodiment.

A content of cubic boron nitride in the polycrystalline cubic boron nitride is preferably 98.8% by volume, more preferably 99% by volume, most preferably 100% by volume. While larger contents of cubic boron nitride are preferable, and accordingly, the content's upper limit is not particularly limited, it can for example be 99.5% by volume or less, and it can be 100% by volume or less.

The contents of cubic boron nitride and a binder phase in the polycrystalline cubic boron nitride can be confirmed by observing the cBN sintered material's structure, subjecting the cBN sintered material to an elemental analysis, and the like by using an energy dispersive X-ray analyzer (EDX) accompanying a scanning electron microscope (SEM).

Specifically, the content ratios of cubic boron nitride and the binder phase (in % by volume) can be determined as follows: Initially, the polycrystalline cubic boron nitride is cut at a desired location to prepare a sample including a cross section of the polycrystalline cubic boron nitride. The cross section can be prepared using a focused ion beam device, a cross section polisher, or the like. Subsequently, the cross section is observed with an SEM with a magnification of 2,000 times to obtain a backscattered electron image. In the backscattered electron image, a region where cubic boron nitride is present will be a black region and a region where the binder phase is present will be a gray region or a white region.

Subsequently, the backscattered electron image is subjected to monochrome processing (i.e., converted into a black-and-white image) using image analysis software ("WinROOF Ver. 7.4.1" by Mitani Corporation, for example) for automatic binarization. From the binarized image, an areal ratio of pixels that are attributed to a dark field in an area of a field of view for measurement (i.e., pixels attributed to cubic boron nitride) is calculated. The calculated areal ratio can be regarded as a value in % by volume, and a cBN grain content ratio (vol %) can thus be obtained.

From the binarized image, an areal ratio of pixels that are attributed to a bright field in the area of the field of view for measurement (i.e., pixels attributed to the binder phase) can be calculated to obtain a binder phase content ratio (vol%).

In addition to nitrogen and boron, the polycrystalline cubic boron nitride can include inevitable impurities such as hydrogen, carbon, oxygen, an alkali metal element (lithium (Li), sodium (Na), potassium (K), and the like), an alkaline earth metal element (magnesium (Mg), calcium (Ca), and the like), and the like. The contents of these inevitable impurities can be measured through secondary ion mass spectrometry (SIMS).

The polycrystalline cubic boron nitride may include one or both of compressed hexagonal boron nitride (hereinafter also referred to as "compressed hBN") and wurtzite boron nitride (hereinafter also referred to as "wBN") as a component other than cubic boron nitride in a range allowing an effect of the present embodiment to be exhibited. A total content ratio of compressed hBN and wBN in the polycrystalline cubic boron nitride is preferably 0% by volume or more and 1.5% by volume or less, preferably 0% by volume or more and 1.2% by volume or less, preferably 0% by volume or more and 1% by volume or less, most preferably 0% by volume. That is, it is most preferable that the polycrystalline cubic boron nitride include neither compressed hBN nor wBN. Herein, "compressed hexagonal boron nitride" means a hexagonal boron nitride having a crystal structure similar to that of normal hexagonal boron nitride, and having a plane spacing along the c-axis smaller than that of normal hexagonal boron nitride (0.333 nm).

The content ratio of each of cubic boron nitride, compressed hexagonal boron nitride, and wurtzite boron nitride in the polycrystalline cubic boron nitride can be measured through X-ray diffractometry. A specific measurement method is as follows.

An X-ray spectrum of the polycrystalline cubic boron nitride is obtained using an X-ray diffractometer ("X'pert" (trade name) manufactured by Spectris). The measurement is done at a portion of rake face 10 of blade 3 which is free of chip breaker 9 and away from chip breaker 9 by 10 µm or more. The X-ray diffractometer is used for example under the following conditions:
Characteristic X-ray: Cu-Kα (wavelength: 1.54 angstrom)
Tube voltage: 45 kV
Tube current: 40 mA
Filter: Multi-layer mirror
Optical system: Focusing method
X-ray diffractometry: θ-2θ method

In the obtained X-ray spectrum, the following peak intensity A, peak intensity B, and peak intensity C are measured.
Peak intensity A: a peak intensity of compressed hexagonal boron nitride, which is a peak intensity near a diffraction angle 2θ = 28.5° excluding a background.
Peak intensity B: a peak intensity of wurtzite boron nitride, which is a peak intensity near a diffraction angle 2θ = 40.8° excluding a background.
Peak intensity C: a peak intensity of cubic boron nitride, which is a peak intensity near a diffraction angle 2θ = 43.5° excluding a background.

The content ratio of the cubic boron nitride in the polycrystalline cubic boron nitride is determined by calculating the value of peak intensity C/(peak intensity A + peak intensity B + peak intensity C). The content ratio of the compressed hexagonal boron nitride in the polycrystalline cubic boron nitride is determined by calculating the value of peak intensity A/(peak intensity A + peak intensity B + peak intensity C). The content ratio of the wurtzite boron nitride in the polycrystalline cubic boron nitride is determined by calculating the value of peak intensity B/(peak intensity A + peak intensity B + peak intensity C). As compressed hexagonal boron nitride, wurtzite boron nitride, and cubic boron nitride all have almost the same electronic weight, a ratio among the above X-ray peak intensities can be regarded as a volume ratio in the polycrystalline cubic boron nitride.

The polycrystalline cubic boron nitride may include inevitable impurities as long as an effect of the present embodiment is exhibited. The inevitable impurities can for example be hydrogen, oxygen, and the like. A content ratio of inevitable impurities in the polycrystalline cubic boron nitride is preferably 0.5% by mass or less, most preferably 0% by mass. That is, it is most preferable that the polycrystalline cubic boron nitride does not include inevitable impurities.

The content ratio of the inevitable impurities in the polycrystalline cubic boron nitride can be measured through secondary ion mass spectrometry (SIMS).

The polycrystalline cubic boron nitride substantially does not include a binder, a sintering aid, a catalyst, or the like. As a result, the polycrystalline cubic boron nitride can be improved in strength and thermal diffusivity.

The polycrystalline cubic boron nitride is preferably composed of crystal grains having an average grain diameter of 100 nm or more and 500 nm or less, more preferably 150 nm or more and 350 nm or less, and still more preferably 200 nm or more and 300 nm or less. The crystal grains' average grain diameter means a median diameter d50 of equivalent circle diameters of the crystal grains. A method for measuring the median diameter d50 of the equivalent circle diameters of the crystal grains will be specifically described below.

The polycrystalline cubic boron nitride is cut by wire electric discharge machining, a diamond grindstone electrodeposition wire, or the like so that a measurement point is exposed, and the cut surface is CP (cross section polisher) processed. The measurement point on the CP processed surface is observed using a SEM ("JSM-7500F" (trade name) manufactured by JEOL Ltd.) to obtain a SEM image. The measurement is done in a field of view having a size of 12 µm × 15 µm, and the observation is done at a magnification of 10,000 times.

The area of each of the crystal grains and the distribution of the equivalent circle diameters of the crystal grains are calculated for the SEM image using image processing software (Win Roof ver. 7.4.5) in a state where the crystal grains observed within the field of view for measurement are separated from each other at their grain boundaries. From the distribution of the equivalent circle diameters of the crystal grains, a median diameter d50 is calculated.

The polycrystalline cubic boron nitride preferably has a transmittance of 0.2% or more for light of a range in wavelength of 500 nm or more and 1100 nm or less. The transmittance is more preferably 0.5% or more, and still more preferably 0.6% or more. While the transmittance's upper limit value is not particularly limited, it is preferably 0.8% or less from a viewpoint of manufacture.

For example, when the polycrystalline cubic boron nitride is composed of crystal grains having a grain diameter of 100 nm or more and 500 nm or less and includes one or both of compressed hBN and wBN as an element other than carbon at a content ratio of 1.5% by volume or less in total, the polycrystalline cubic boron nitride will have a transmittance of 0.2% or more for light of a range in wavelength of 500 nm or more and 1100 nm or less. Note that the crystal grain's grain diameter and the compressed hBN and wBN's content ratio indicated above are an example, and are not limited to the ranges indicated above.

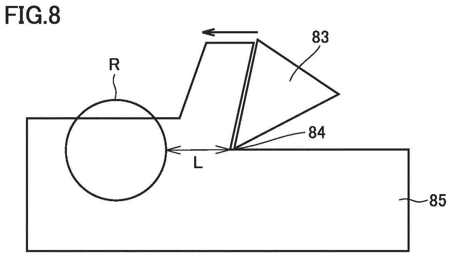

Conventionally, for cutting a workpiece made of Ni-base heat-resistant alloy, cemented carbide, ceramic or similar hard brittle materials, there has been a processing method in which a portion of the workpiece frontwardly of a cutting point in a processing direction is heated by laser irradiation, softened, and thereafter processed in order to better handle chips and increase the tool's service life. Specifically, as shown in Fig. 8, a region of a workpiece frontwardly of a cutting point, which is a point where cutting edge 84 of blade 83 contacts workpiece 85, in a processing direction (a direction indicated in Fig. 8 by a left arrow) (i.e., a laser irradiation region indicated in Fig. 8 by R) is heated by laser irradiation and thus softened, and thereafter processed.

Conventional cubic boron nitride has a transmittance of substantially 0% for light having a wavelength of 500 nm or more, and absorbs laser light (wavelength: 500 nm or more) for heating a workpiece. Therefore, when a tool using conventional cubic boron nitride is used to perform a process to cut a workpiece while the workpiece is subjected to laser irradiation, the tool itself would also be heated and will perform the process in an environment at a higher temperature than in a normal cutting process, and the tool's cutting performance would be impaired. Accordingly, in a cutting process using a tool using conventional cubic boron nitride, it is difficult to make a laser irradiation region of a workpiece close to a cutting point, and laser irradiation has been performed at a location away from the cutting point.

When the laser irradiation region is away from the cutting point, a long period of time elapses after the region is irradiated by a laser before the region undergoes a cutting process, and the region will be processed while it is getting cold. As the tool does not process a soften workpiece, the tool does not sufficiently effectively handle chips or have an increased service life.

The cutting insert according to the present embodiment employs a polycrystalline cubic boron nitride having a transmittance of 0.2% or more for light of a range in wavelength of 500 nm or more and 1100 nm or less. The polycrystalline cubic boron nitride having a transmittance of 0.2% or more substantially does not absorb light as the polycrystalline cubic boron nitride reflects light at a surface thereof and scattering of light through an irradiation path causes loss. Therefore, even when the cutting insert according to the present embodiment is used to cut a workpiece while a portion of the workpiece closer to a cutting point is heated by laser irradiation, the cutting insert (or the tool) does not absorb laser light, and the tool's cutting performance is thus not impaired. Further, the laser irradiation region of the workpiece can maintain a high temperature and be processed in a soften state, and the cutting insert can better handle chips and have an increased service life.

The polycrystalline cubic boron nitride's transmittance for light of a range in wavelength of 500 nm or more and 1100 nm or less can be measured through infrared (IR) absorption spectroscopy.

Blade 3 configures a rake face 10 which has in a top view a generally triangular shape identical to a bottom surface of a notch of body 2, a bottom surface opposite to rake face 10 and identical in shape to rake face 10, and a flank face 33 connecting a periphery of rake face 10 and a periphery of the bottom surface.

Of the sides configuring the periphery of rake face 10 of blade 3, a side formed by a ridge line of a position at which the blade 3 rake face 10 and flank face 33 meet each other configures a cutting edge 4.

On rake face 10 of blade 3, a land surface 5 is formed to extend along cutting edge 4. Furthermore, on rake face 10 of blade 3, chip breaker 9 is formed opposite to cutting edge 4 with land surface 5 therebetween and also having a recess contiguous to land surface 5. While Figs. 1 and 2 show chip breaker 9 having a uniform width, the chip breaker is not limited in shape thereto. For example, the chip breaker may not be uniform in width. The chip breaker may have an opening on the rake face in the form of a circle.

The recess of chip breaker 9 is preferably opened only to the rake face. That is, preferably, land surface 5 exists between chip breaker 9 and cutting edge 4, chip breaker 9 is not in contact with cutting edge 4, and chip breaker 9 does not penetrate to flank face 33.

In the cutting insert according to the present embodiment, the recess of the chip breaker does not penetrate to the flank face. In a case of forming a chip breaker in a conventional grinding or similar method, it has been in effect impossible to form a recess inside a land surface to be recessed with respect to the land surface. In particular, it has been impossible to form a land surface along a cutting edge and form a chip breaker including a recess "that does not penetrate to a flank face." The cutting insert according to the present embodiment has a recess of a chip breaker without penetrating to the flank face, and the cutting insert thus has a longer cutting edge and a longer chip breaker and thus provides improved cutting performance.

Preferably, rake face 10 of blade 3 is preferably flush with an upper surface of blade 3, and land surface 5 is flush with rake face 10. This allows chips to be easily shredded and the cutting insert to better handle the chips.

When blade 3 is seen in a top view, land surface 5 has a determined width W1 in a direction perpendicular to cutting edge 4 (and in a direction perpendicular to a tangent to cutting edge 4 at a corner of cutting edge 4) (see Fig. 3). Land surface 5 preferably has width W1 in a range of 10 µm or more and 100 µm or less. Land surface 5 having width W1 of 10 µm or more allows the blade to have the cutting edge with strength maintained and can prevent the cutting edge from chipping and thus enhance the cutting insert in service life as a tool. Land surface 5 having width W1 of 100 µm or less allows cutting to be done while preventing chips from running up onto the land surface and thus being large in length and the cutting insert better handles chips. Further preferably, land surface 5 has width W1 of 10 µm or more and 70 µm or less.

Preferably, land surface 5 has a surface roughness in a range of 0.05 µm or more and 0.2 µm or less. This allows the blade to have a cutting edge formed sharply and thus provides a workpiece with satisfactory finished surface roughness. Herein, surface roughness is a ten-point average height (Rz). More specifically, it is a value that is obtained in a portion extracted from a profile curve only by a reference length and represents a difference between an average value of the highest to fifth highest peaks' altitudes and an average value of the deepest to fifth deepest troughs' altitudes, as represented in micrometers (µm). Further preferably, land surface 5 has a surface roughness in a range of 0.08 µm or more and 0.15 µm or less.

Cutting insert 1 preferably further comprises a hexagonal boron nitride layer 11 formed on a surface of chip breaker 9. In the present specification, a hexagonal boron nitride layer means a layer including 50% by volume or more of hexagonal boron nitride. This improves cutting insert 1 in wear resistance. Although why it does so is not clear, it is inferred that hexagonal boron nitride imparts lubricity to the cutting insert.

The hexagonal boron nitride layer preferably includes 50% by volume or more and 100% by volume or less of hexagonal boron nitride. This allows the cutting insert to be further excellently wear resistant. The content ratio of hexagonal boron nitride in the hexagonal boron nitride layer is more preferably 60% by volume or more and 100% by volume or less, and most preferably 100% by volume. That is, it is most preferable that the hexagonal boron nitride layer be composed of hexagonal boron nitride alone. Herein, hexagonal boron nitride is defined as including compressed hexagonal boron nitride in addition to hexagonal boron nitride which is a stable phase at atmospheric temperatures and pressures.

The hexagonal boron nitride layer preferably has a thickness of 2 µm or more and 10 µm or less. This allows the cutting insert to have lubricity derived from hexagonal boron nitride while maintaining high hardness derived from cubic boron nitride, and thus have excellent wear resistance. The hexagonal boron nitride layer more preferably has a thickness of 3 µm or more and 9 µm or less, still more preferably 4 µm or more and 8 µm or less.

The content ratio of hexagonal boron nitride in the hexagonal boron nitride layer and the thickness of the hexagonal boron nitride layer can be measured through X-ray diffractometry. A specific measurement method is as follows.

Initially, blade 3 is cut by wire electric discharge machining (WEDM) so as to pass through chip breaker 9 formed on rake face 10, thereby exposing a cross section including the recess. On the exposed surface, measurement points are set at intervals of 1 µm from the surface of rake face 10 in a depthwise direction. At each measurement point, an X-ray spectrum is obtained using an X-ray diffractometer ("X'pert" (trade name) manufactured by Spectris). The X-ray diffractometer is used for example under the following conditions:
Characteristic X-ray: Cu-Kα (wavelength: 1.54 angstrom)
Tube voltage: 45 kV
Tube current: 40 mA
Filter: Multi-layer mirror
Optical system: Focusing method
X-ray diffractometry: θ-2θ method

In the obtained X-ray spectrum, the following peak intensity A', peak intensity B', and peak intensity C' are measured.
Peak intensity A': a peak intensity of compressed hexagonal boron nitride, which is a peak intensity near a diffraction angle 2θ = 28.5° excluding a background.
Peak intensity B': a peak intensity of wurtzite boron nitride, which is a peak intensity near a diffraction angle 2θ = 40.8° excluding a background.
Peak intensity C': a peak intensity of cubic boron nitride, which is a peak intensity near a diffraction angle 2θ = 43.5° excluding a background.

The content ratio of the hexagonal boron nitride is determined by calculating the value of peak intensity A'/(peak intensity A' + peak intensity B' + peak intensity C'). As hexagonal boron nitride, wurtzite boron nitride, and cubic boron nitride all have almost the same electronic weight, a ratio among the above X-ray peak intensities can be regarded as a volume ratio in the hexagonal boron nitride layer.

The thickness of the hexagonal boron nitride layer can be confirmed by observing the measured X-ray spectrum and measuring a depth, which corresponds to a thickness, of a region in which the hexagonal boron nitride's intensity ratio is 50% or more.

A shape of the recess formed in the rake face of blade 3 (hereinafter also referred to as a "first recess") will be described below as an example. In the following description, the first recess formed on the rake face of blade 3 will be described as being composed of a recess included in chip breaker 9 (hereinafter also referred to as a "second recess"), that is, as being identical to the second recess, although this is not exclusive. The first recess formed on the rake face of blade 3 also includes a case where the hexagonal boron nitride layer is formed on a surface of chip breaker 9 and a surface of the cubic boron nitride layer forms a wall surface of the first recess. That is, in the present specification, the first recess formed on the rake face of blade 3 may be composed only of the second recess included in chip breaker 9, or the first recess may have a wall surface formed by a hexagonal boron nitride layer formed on a surface of the second recess.

When the cutting insert does not include a hexagonal boron nitride layer, a surface forming an outer edge of the first recess of the rake face, which corresponds to the second recess of the chip breaker, preferably includes a first breaker surface 6 receding from land surface 5 continuously as a distance toward a center of blade 3 increases, a second breaker surface 8 extending along a rear end of first breaker surface 6 and having a fixed distance from an upper surface of blade 3 along a normal to the upper surface of blade 3, and a third breaker surface 16 raised from a rear end of second breaker surface 8 continuously as a distance from land surface 5 increases. This allows chips flowing out in cutting a workpiece to first flow out along first breaker surface 6 toward second breaker surface 8. At the time, distortion is imparted to the chips and thus helps to shred the chips. The chips reach second breaker surface 8 and thereafter collide against third breaker surface 16. At the time, the chips are shredded by the collision. Or the chips are shredded as further distortion is imparted thereto.

Preferably, first breaker surface 6 at a portion formed along a cutting edge in the form of a curve of a corner of blade 3 is identical in shape to a portion of a side surface of the shape of a body of revolution. According to this, in cutting a workpiece, chips flow out along first breaker surface 6 of the chip breaker toward second breaker surface 8 of the chip breaker, and large distortion can be imparted to the chips. Herein, the shape of the body of revolution means a solid that can be formed by revolving a plane figure once with a straight line on its plane serving as an axis of revolution. The shape of the body of revolution includes a sphere, a cone, and the like for example. When the shape of the body of revolution has the axis on a bisector of the corner angle of blade 3, chips flow to second breaker surface 8 located under the bisector of the corner angle, and larger distortion can be imparted to the chips. Preferably, first breaker surface 6 at a portion formed along a cutting edge in the form of a curve of a corner of blade 3 has a shape identical to a portion of a side surface of a cone. This can maintain the cutting edge's strength.

An angle of inclination α of first breaker surface 6 relative to land surface 5 is preferably in a range of 15 degrees or more and 50 degrees or less. This allows cutting to be done with chips easily flowing out along first breaker surface 6 and the cutting insert thus better handles chip. Furthermore, it can also maintain the strength of the cutting edge of the blade and thus also enhance the cutting insert in service life as a tool. Note that angle of inclination α of first breaker surface 6 relative to land surface 5 is an acute angle among angles formed by an imaginary plane assumed when land surface 5 is extended to above the recess of the chip breaker and the first breaker surface 6. Angle of inclination α of first breaker surface 6 relative to land surface 5 is more preferably 20 degrees or more and 40 degrees or less.

Preferably, the recess formed in the rake face of blade 3 has a maximum depth in a range of 60 µm or more and 300 µm or less. This allows cutting to be done with distortion effectively imparted to chips and the cutting insert thus better handles chips. Note that a maximum depth of the recess formed in the rake face of blade 3 is a maximum value of a distance to the bottom of the recess (in Fig. 3, second breaker surface 8) from an imaginary plane assumed when the rake face is extended to above the recess. The recess formed in the rake face of blade 3 still preferably has a maximum depth in a range of 60 µm or more and 200 µm or less.

When blade 3 is seen in a top view, the recess formed in the rake face of blade 3 preferably has a width W2 in a range of 0.2 mm or more and 1.0 mm or less in a direction perpendicular to cutting edge 4 (and perpendicular to a tangent to cutting edge 4 at a corner of cutting edge 4) (hereinafter also referred to as "the width of the recess") (see Fig. 3). This allows chips flowing out in cutting to collide against third breaker surface 16, rather than running up onto rake face 10 of blade 3, and be easily shredded, and the cutting insert thus better handles chips. The recess formed in the rake face of blade 3 still preferably has width W2 in a range of 0.25 mm or more and 0.7 mm or less.

When blade 3 is seen in a top view, second breaker surface 8 preferably has a width W5 in a range of 0.1 mm or more and 1.0 mm or less in a direction perpendicular to cutting edge 4 (and perpendicular to a tangent to cutting edge 4 at a corner of cutting edge 4) (hereinafter also referred to as "the width of the second breaker surface") (see Fig. 3). This allows chips flowing out in cutting to collide against third breaker surface 16, rather than running up onto rake face 10 of blade 3, and be easily shredded, and the cutting insert thus better handles chips. The second breaker surface still preferably has width W5 in a range of 0.3 mm or more and 0.7 mm or less.

### (Application)

The cutting insert according to the present embodiment can be particularly effectively used in high-efficiency processing of hard-to-cut materials such as titanium alloy and cobalt-chromium alloy. The present cutting insert can also be suitably applied to various types of processing of other general metals.

### [Method (1) for Manufacturing Cutting Insert]

A method (1) for manufacturing a cutting insert according to an embodiment of the present disclosure is a method for manufacturing the cutting insert described above. The method comprises: preparing a blade made of a polycrystalline cubic boron nitride including 98.5% by volume or more of cubic boron nitride (hereinafter also referred to as a "blade preparation step"); bonding the blade to a body (hereinafter also referred to as a "bonding step"); and irradiating a rake face of the blade with laser light to form on the rake face a chip breaker including a recess to obtain the cutting insert (hereinafter also referred to as a "laser irradiation step"). The laser light has a wavelength of 500 nm or more and 1200 nm or less and a repetition frequency of 100 Hz or more and 1500 Hz or less and provides an output of 10 W or more and 6 kW or less. Each step will more specifically be described hereinafter.

### (Blade Preparation Step)

The blade made of the polycrystalline cubic boron nitride can be prepared, for example, by manufacturing in the following manner. Initially, hexagonal boron nitride particles are introduced into an ultrahigh-temperature and ultrahigh-pressure apparatus, and are directly converted into cubic boron nitride at ultrahigh-pressure and ultrahigh-temperature without using a catalyst and simultaneously sintered to prepare a polycrystalline cubic boron nitride. The sintering is done preferably with a pressure of 7.7 GPa or more and 15 GPa or less applied. Furthermore, the sintering is done preferably at a temperature of 2100°C or higher and 2500°C or lower. The sintering is done preferably for 10 minutes or more and 180 minutes or less.

Subsequently, the polycrystalline cubic boron nitride obtained as above is set in a laser processing machine and then cut into a desired shape using laser light, and a cut surface is polished to obtain a blade formed of the polycrystalline cubic boron nitride.

The blade made of the cubic boron nitride sintered material is not particularly limited in shape insofar as it can be bonded to a mother material of a tool and thus used, and it can for example be a shape such as a rectangular parallelepiped, a triangular prism, a triangular pyramid, a prism, or a circular cylinder.

### (Bonding Step)

Subsequently, the blade obtained as described above is bonded to the body. Specifically, a bonding material is sandwiched between the blade and the body, and the blade and the body with the bonding material interposed are placed in a vacuum furnace. The vacuum furnace is internally vacuumed to 2×10⁻² Pa or less and has an internal temperature set to 750°C or higher to melt the bonding material and thus bond the blade and the body together.

The bonding material can be of a conventionally known composition. The bonding material preferably includes Ti, Zr, and Cu, for example. When Ti, Zr, and Cu are included, excellent high temperature strength can be provided, and even when the bonding material is exposed to high temperature through high efficiency cutting or the like, the bonding material is less likely to soften and can per se be prevented from being damaged.

Subsequently, the blade and the body bonded together are slowly cooled in the vacuum furnace to solidify the molten bonding material. A side surface of the bonding of the blade and the body is polished and thus smoothened.

### (Laser Irradiation Step)

Subsequently, the rake face of the blade is irradiated with laser light to form a chip breaker including a recess on the rake face to obtain a cutting insert. Polycrystalline cubic boron nitride is transparent and absorbs laser light in an extremely limited amount, and conventionally it could not be processed with a laser processing machine. As a result of intensive studies, the present inventors have found that the polycrystalline cubic boron nitride can be laser-processed under some prescribed conditions. Specific conditions for laser processing in this step are as follows:

The laser light has a wavelength of 500 nm or more and 1200 nm or less, preferably 1000 nm or more and 1100 nm or less. The laser light has a repetition frequency of 100 Hz or more and 1500 Hz or less, preferably 200 Hz or more and 400 Hz or less. The laser light provides an output of 10 W or more and 6 kW or less, preferably 0.1 kW or more and 2 kW or less, more preferably 0.5 kW or more and 1.5 kW or less. The laser light preferably has a pulse width of 0.01 ms or more and 10 ms or less. The laser light's processing speed is preferably 0.5 mm/s or more and 5 mm/s or less. The laser preferably has a nozzle with a diameter of 30 to 100 µm.

When the polycrystalline cubic boron nitride is irradiated with laser light under the above conditions, a portion of the laser irradiation area is locally heated. The cubic boron nitride in the heated portion undergoes a phase transition to hexagonal boron nitride. Hexagonal boron nitride absorbs laser light and can thus be laser-processed. By thus setting a laser processing condition in the above range, a three-dimensional chip breaker having a complicated shape that conventionally could not be formed with a grinding wheel can be formed on a rake face of a blade highly accurately and efficiently.

In the laser irradiation step while the three-dimensional chip breaker is formed on the rake face of the blade a hexagonal boron nitride layer is formed on a surface of the three-dimensional chip breaker. When a lubricating effect by the hexagonal boron nitride layer is not required, the hexagonal boron nitride layer may be removed by a method such as blasting after the laser irradiation step.

As a laser processing apparatus, a laser processing apparatus using a water column as an optical path or a dry laser processing apparatus can be used.

### [Method (2) for Manufacturing Cutting Insert]

A method (2) for manufacturing a cutting insert according to an embodiment of the present disclosure is a method for manufacturing the cutting insert described above. The method comprises: preparing a blade made of a polycrystalline cubic boron nitride including 98.5% by volume or more of cubic boron nitride (hereinafter also referred to as a "blade preparation step"); bonding the blade to a body (hereinafter also referred to as a "bonding step"); and irradiating a rake face of the blade with laser light to form on the rake face a chip breaker including a recess to obtain the cutting insert (hereinafter also referred to as a "laser irradiation step"). The laser light has a wavelength of 500 nm or more and 1200 nm or less and a repetition frequency of 10 kHz or more and 1 GHz or less and provides an output of 0.5 W or more and 50 W or less.

In the present embodiment, the "blade preparation step" and the "bonding step" are identical to those in the above-described method (1) for manufacturing the cutting insert, and accordingly, will not described repeatedly. In the present embodiment, the laser irradiation step is performed under the following conditions for laser irradiation:

The laser light has a wavelength of 500 nm or more and 1200 nm or less, preferably 1000 nm or more and 1100 nm or less. The laser light has a repetition frequency of 10 kHz or more and 1 GHz or less, preferably 100 kHz or more and 0.5 GHz or less. The laser light provides an output of 0.5 W or more and 50 W or less, preferably 1 W or more and 15 W or less. The laser light preferably has a pulse width of 0.01 ms or more and 10 ms or less. The laser light's processing speed is preferably 0.5 mm/s or more and 5 mm/s or less. The laser preferably has a nozzle with a diameter of 30 to 100 µm.

### EXAMPLES

The present embodiment will be described more specifically with reference to examples. Note, however, that the present embodiment is not limited to these examples.

### [Example 1]

### (Producing Cutting Insert)

### [Samples 1 to 9]

A Blade composed of polycrystalline cubic boron nitride including 98.5% by volume of cubic boron nitride was prepared. The blade was bonded to a corner of the body by using a bonding material, and grinding was thereafter performed with a diamond grinding wheel of #1500 to provide a cutting edge.

For each of Samples 1 to 4 and Samples 7 to 9, laser light (high-power pulse laser (wavelength: 1070 nm)) was applied to the rake face of the blade under laser processing conditions shown in Table 1 (repetition frequency and output) with a processing pitch of 1 µm to form a chip breaker to obtain a cutting insert. The obtained cutting insert generally had a shape and the formed chip breaker had a shape, as indicated below:

### (Shape of Cutting Insert)

model no. of cutting insert: CNGG120408
material of cutting insert: polycrystalline boron nitride including 99.2% by volume of boron nitride
model no. of holder: PCLNL2525M12

### (Shape of Chip Breaker)

shape of rake face: identical to a portion of a side surface of a cone with angle of inclination α of 20 degrees
width of land surface (W1): 0.07 mm
maximum depth of recess (D): 0.5 mm
width of recess (W2): 0.7 mm
width of second breaker surface (W5): 0.4 mm
surface roughness of land surface (Rz): Rz 0.12 µm

The chip breaker's shape as specified above is such that the recess has a wall surface including a first breaker surface receding from the land surface continuously as a distance from the land surface increases, a second breaker surface extending along a rear end of the first breaker surface and having a fixed distance from an upper surface of the blade along a normal to the upper surface of the blade, which corresponds to the recess's maximum depth (D), and a third breaker surface raised from a rear end of the second breaker surface continuously as a distance from the land surface increases.

For Sample 4, the chip breaker had a surface blasted and thus removed by 3 µm.

For Sample 5, no laser irradiation was performed and no chip breaker was formed. The cutting insert generally had the same shape as Sample 1 described above.

For Sample 6, laser light (high-power pulse laser (wavelength: 1070 nm)) was applied to the rake face of the blade under laser processing conditions shown in Table 1 (repetition frequency and output) with a processing pitch of 1 µm, and no chip breaker was formed. The cutting insert generally had the same shape as Sample 1 described above.

Two cutting inserts were provided for each sample. Each obtained cutting insert was subjected to a measurement and a cutting test, as follows:

### (Measurement)

Initially, each obtained cutting insert had its blade cut by wire electric discharge machining so as to pass through the chip breaker formed on the rake face, thereby exposing a cross section including the recess. On the exposed surface, measurement points were set at intervals of 1 µm from a surface of the rake face in a depthwise direction. At each measurement point, an X-ray spectrum was obtained using an X-ray diffractometer ("X'pert" (trade name) manufactured by Spectris). Hexagonal boron nitride's content ratio at each measurement point was measured based on the X-ray spectrum. As the X-ray diffractometer's conditions and how the hexagonal boron nitride's content ratio was calculated will not be described specifically as they have been described in the above embodiment. A region having a hexagonal boron nitride content ratio of 50% by volume or more was determined as a hexagonal boron nitride layer and measured in thickness. A result thereof is shown in Table 1 at the "thickness of hBN layer" column.

### (Cutting Test)

Using the obtained cutting inserts, a cutting test was carried out under the following conditions to evaluate how chips were handled and wear resistance.
Workpiece: cylindrical titanium alloy (Ti-6A1-4V)
Cutting method: external turning of a diameter of 100 (mm) x a length of 500 (mm)
Cutting manner: wet cutting
Workpiece's circumferential surface speed: 200 (m/min)
Cutting depth: 0.2 (mm)
Feed rate: 0.1 (mm/rev)

For chip handleability, produced chips were measured in length. A result is indicated in table 1 at the "length of chips" column. A cutting insert providing chips having a length in a range of 5 mm or more and 300 mm or less was determined to satisfactorily handle chips.

Wear resistance was evaluated by measuring a processing time having elapsed before flank wear reached an amount of 0.1 mm. A result is indicated in table 1 at the "processing time" column. A longer processing time indicates more excellent wear resistance.

**Table 1**

| sample nos. | laser processing conditions (repetition frequency/output) | chip breaker | blasting | thickness of hBN layer | length of chips | processing time |
|---|---|---|---|---|---|---|
| 1 | 250 Hz/1.5 kw | present | not done | 6 µm | 50 mm to 100 mm | 116 min. |
| 2 | 230 Hz/1.0 kw | present | not done | 3 µm | 50 mm to 100 mm | 113 min. |
| 3 | 270 Hz/2.0 kw | present | not done | 8 µm | 50 mm to 100 mm | 112 min. |
| 4 | 250 Hz/0.3 kw | present | done | 0 µm | 50 mm to 100 mm | 106 min. |
| 5 | - | absent | not done | 0 µm | not shredded | 43 min. |
| 6 | 300 Hz/0.05 kw | not processable | not done | 0 µm | not shredded | 41 min. |
| 7 | 250 Hz/4.0 kw | present | not done | 13 µm | 50 mm to 100 mm | 83 min. |
| 8 | 230 Hz/6.0 kw | present | not done | 19 µm | 50 mm to 100 mm | 71 min. |
| 9 | 800k Hz/4 W | present | not done | 0 µm | 50 mm to 100 mm | 109 min. |

### (Results)

For Samples 1 to 4, Sample 7, and Sample 8, laser irradiation was performed with laser light having a wavelength of 1070 nm, a repetition frequency of 230 Hz to 270 Hz, and an output of 0.3 kW to 6 kW. For Sample 9, laser irradiation was performed with laser light having a wavelength of 1070 nm, a repetition frequency of 800 kHz, and an output of 4 W. For Samples 1 to 4 and Samples 7 to 9, laser irradiation was performed under conditions corresponding to those of Examples. The cutting inserts of Samples 1 to 4 and Samples 7 to 9 have a blade with a rake face provided with a chip breaker including a recess and thus correspond to Examples. The cutting inserts of Samples 1 to 4 and Samples 7 to 9 satisfactorily handled chips and provided a processing time of 71 minutes or more. Note that in Samples 1 to 3, Sample 7 and Sample 8, a hexagonal boron nitride layer was observed on a surface of the chip breaker.

The cutting insert of Sample 5 has no chip breaker and thus corresponds to a comparative example. The cutting insert of Sample 5 did not shred chips in the cutting test, and thus poorly handled the chips. The sample also provided a shorter processing time than Samples 1 to 4 and Samples 7 to 9.

For sample 6 laser irradiation was performed with laser light of a frequency of 300 Hz and an output of 0.05 kW. This condition for laser irradiation corresponds to a comparative example. Sample 6 cannot form a chip breaker and corresponds to a comparative example. In Sample 6, no hexagonal boron nitride layer was observed on a surface of a rake face irradiated with laser light. The cutting insert of Sample 6 did not shred chips in the cutting test and thus poorly handled the chips. The sample also provided a shorter processing time than Samples 1 to 4 and Samples 7 to 9.

### (Discussion)

It has been confirmed that Samples 1 to 4 and Samples 7 to 9 (Examples) satisfactorily handled chips, and also provided a longer processing time and larger wear resistance than Sample 5 and Sample 6 (Comparative Example).

Inter alia, Samples 1 to 3 are considered to have particularly excellent wear resistance because a hexagonal boron nitride layer, which is lower in hardness than polycrystalline cubic boron nitride, has a thickness of an extent which does not decrease the blade in hardness (i.e., 3 µm or more and 8 µm or less), while the hexagonal boron nitride layer imparts a lubricating effect.

### Example 2

### (Producing Cutting Insert)

### <Sample 2-1 to sample 2-12>

A blade made of a polycrystalline cubic boron nitride was prepared. Each sample's polycrystalline cubic boron nitride has a cubic boron nitride content ratio as indicated in table 2 at the "cBN content ratio" column and is composed of crystal grains having an average grain diameter as indicated in table 2 at the "average grain diameter" column, and has a transmittance for light of a range in wavelength of 500 nm or more and 1100 nm or less, as indicated in table 2 at the "transmittance for light of a range in wavelength of 500 nm or more and 1100 nm or less" column.

An average grain diameter of crystal grains configuring the polycrystalline cubic boron nitride means a median diameter d50 of equivalent circle diameters of the crystal grains. A method for measuring the median diameter d50 of the equivalent circle diameters of the crystal grains will be specifically described below.

The polycrystalline cubic boron nitride is cut by wire electric discharge machining, a diamond grindstone electrodeposition wire, or the like so that a measurement point is exposed, and the cut surface is CP (cross section polisher) processed. The measurement point on the CP processed surface is observed using a SEM ("JSM-7500F" (trade name) manufactured by JEOL Ltd.) to obtain a SEM image. The measurement is done in a field of view having a size of 12 µm × 15 µm, and the observation is done at a magnification of 10,000 times.

The area of each of the crystal grains and the distribution of the equivalent circle diameters of the crystal grains are calculated for the SEM image using image processing software (Win Roof ver. 7.4.5) in a state where the crystal grains observed within the field of view for measurement are separated from each other at their grain boundaries. From the distribution of the equivalent circle diameters of the crystal grains, a median diameter d50 is calculated.

Note that, as measured by the applicant, it has been confirmed that, as measured in the same sample, while a result of measurement of a median diameter d50 of crystal grains is calculated a plurality of times while a location where a field of view for measurement is selected is changed, measurement results are obtained without substantial variation and there is no arbitrariness even with a field of view set, as desired, for measurement.

Transmittance for light of a range in wavelength of 500 nm or more and 1100 nm or less is a value measured through infrared (IR) absorption spectroscopy.

The blade was bonded to a corner of the body by using a bonding material, and grinding was thereafter performed with a diamond grinding wheel of #1500 to provide a cutting edge.

For each sample, the blade had the rake face irradiated with laser light (high-power pulse laser (wavelength: 1070 nm)) under a laser processing condition of a frequency of 250 Hz and an output of 1.5 kW with a processing pitch of 1 µm to form a chip breaker to obtain a cutting insert. The obtained cutting insert's general shape and the formed chip breaker's shape were identical to sample 1.

Using the obtained cutting insert, a cutting test was carried out while irradiating a workpiece with laser light having a wavelength of 500 nm, and the tool's service life was evaluated. For each sample, laser irradiation was performed by adjusting a distance L between a cutting point and a laser irradiation region (see Fig. 8) to be a distance indicated in table 2 at the "distance L from the cutting point to the laser irradiation region" column. The cutting was done under the following conditions:
Workpiece: cylindrical Inconel 718
Cutting method: external turning of a diameter of 120 (mm) x a length of 300 (mm)
Cutting manner: wet cutting
Workpiece's circumferential surface speed: 200 (m/min)
Cutting depth: 0.3 (mm)
Feed rate: 0.1 (mm/rev)

Tool's service life was evaluated by measuring a processing time having elapsed before a maximum flank wear reached an amount of 0.2 mm. A result is indicated in table 2 at the "tool's service life" column. A longer processing time indicates a longer tool service life.

**Table 2**

| sample nos. | cBN content ratio (vol %) | average grain diameter (µm) | transmittance for light of range in waveform of 500 nm or more and 1000 nm or less | distance L from cutting point to laser irradiation region | tool service life |
|---|---|---|---|---|---|
| 2-1 | 99.7 | 0.48 | 0.63% | 1 mm | 26.3 min. |
| 2-2 | 99.7 | 0.48 | 0.63% | 5 mm | 25.2 min. |
| 2-3 | 99.7 | 0.48 | 0.63% | 10 mm | 23.5 min. |
| 2-4 | 99.2 | 0.19 | 0.52% | 10 mm | 23.3 min. |
| 2-5 | 98.9 | 0.26 | 0.36% | 10 mm | 20.2 min. |
| 2-6 | 98.5 | 0.38 | 0.22% | 10 mm | 18.6 min. |
| 2-7 | 97.3 | 0.28 | 0.16% | 10 mm | 8.3 min. |
| 2-8 | 91.7 | 1.8 | 0.00% | 5 mm | 1.0 min. |
| 2-9 | 91.7 | 1.8 | 0.00% | 10 mm | 1.1 min. |
| 2-10 | 91.7 | 1.8 | 0.00% | 20 mm | 6.8 min. |
| 2-11 | 91.7 | 1.8 | 0.00% | 30 mm | 5.3 min. |
| 2-12 | 91.7 | 1.8 | 0.00% | no laser irradiation | 3.9 min. |

### (Result)

The cutting inserts of Samples 2-1 to 2-6 each have a blade made of a polycrystalline cubic boron nitride including 98.5% by volume or more of cubic boron nitride, with the polycrystalline cubic boron nitride having a transmittance of 0.22% or more for light of a range in wavelength of 500 nm or more and 1100 nm or less, and also have the blade with a rake face provided with a chip breaker including a recess, and thus correspond to an example. The cutting inserts of Samples 2-1 to 2-6 provided a processing time (or tool service life) of 18.6 minutes or more.

The cutting inserts of Samples 2-7 to 2-12 each have a blade made of a polycrystalline cubic boron nitride including 97.3% by volume or less of cubic boron nitride, with the polycrystalline cubic boron nitride having a transmittance of 0.16% or less for light of a range in wavelength of 500 nm or more and 1100 nm or less, and thus correspond to a comparative example. The cutting inserts of Samples 2-7 to 2-12 provided a processing time (or tool service life) of 8.3 minutes or less.

### (Discussion)

It has been confirmed that Samples 2-1 to 2-6 (Examples) had longer tool service life than Samples 2-7 to 2-12 (Comparative Examples).

The cutting inserts of Samples 2-1 to 2-6 (Examples) were not heated by laser irradiation even when the distance from the cutting point to the laser irradiation region was a short distance of 10 mm or less, and the workpiece was also softened by laser irradiation, and it is thus believed that the cutting inserts' performance as a tool and hence service life were improved.

The cutting inserts of Samples 2-7 to 2-9 (Comparative Examples) were heated by laser irradiation as the distance from the cutting point to the laser irradiation region was a short distance of 10 mm or less, and it is thus believed the samples provided short tool service life. In Samples 2-10 to 2-12 (Comparative examples) had a distance of 20 mm or more from the cutting point to the laser irradiation region or were not subjected to laser irradiation, and the workpiece was insufficiently heated, and it is thus believed that the samples provided short tool service life.

While embodiments and examples of the present disclosure have been described as above, it is also planned from the beginning that the configurations of the above-described embodiments and examples are appropriately combined and variously modified.

The embodiments and examples disclosed herein are illustrative in any respects and should not be construed as being restrictive. The scope of the present invention is defined by the terms of the claims, rather than the above-described embodiments and examples, and is intended to include any modifications within the scope and meaning equivalent to the claims.

### REFERENCE SIGNS LIST

1 cutting insert, 2 body, 3, 43, 83 blade, 4, 84 cutting edge, 5 land surface, 6 first breaker surface, 7 recess, 8 second breaker surface, 9, 44 chip breaker, 10 rake face, 11 hexagonal boron nitride layer, 16 third breaker surface, 33 flank face, 85 workpiece, R laser irradiation region.

## Claims

1. A cutting insert comprising:
a body; and
a blade fixed to the body and made of a polycrystalline cubic boron nitride including 98.5% by volume or more of cubic boron nitride,
the blade having a rake face and a flank face, the rake face and the flank face meeting each other and thus forming a ridge line which serves as a cutting edge,
the rake face being provided with a land surface extending along the cutting edge, and a chip breaker disposed on a side opposite to the cutting edge with the land surface therebetween and also having a recess contiguous to the land surface.

2. The cutting insert according to claim 1, further comprising a hexagonal boron nitride layer formed on a surface of the chip breaker, wherein
the hexagonal boron nitride layer includes 50% by volume or more and 100% by volume or less of hexagonal boron nitride and has a thickness of 2 µm or more and 10 µm or less.

3. The cutting insert according to claim 1 or 2, wherein the recess opens only for the rake face.

4. The cutting insert according to any one of claims 1 to 3, wherein
the rake face is flush with an upper surface of the blade, and
the land surface is flush with the rake face.

5. The cutting insert according to any one of claims 1 to 4, wherein the polycrystalline cubic boron nitride has a transmittance of 0.2% or more for light of a range in wavelength of 500 nm or more and 1100 nm or less.

6. A method for manufacturing a cutting insert according to any one of claims 1 to 5, comprising:
preparing a blade made of a polycrystalline cubic boron nitride including 98.5% by volume or more of cubic boron nitride;
bonding the blade to the body; and
irradiating a rake face of the blade with laser light to form on the rake face a chip breaker including a recess to obtain the cutting insert,
the laser light having a wavelength of 500 nm or more and 1200 nm or less,
the laser light having a repetition frequency of 100 Hz or more and 1500 Hz or less,
the laser light providing an output of 10 W or more and 6 kW or less.

7. A method for manufacturing a cutting insert according to any one of claims 1 to 5, comprising:
preparing a blade made of a polycrystalline cubic boron nitride including 98.5% by volume or more of cubic boron nitride;
bonding the blade to the body; and
irradiating a rake face of the blade with laser light to form on the rake face a chip breaker including a recess to obtain the cutting insert,
the laser light having a wavelength of 500 nm or more and 1200 nm or less,
the laser light having a repetition frequency of 10 kHz or more and 1 GHz or less,
the laser light providing an output of 0.5 W or more and 50 W or less.
